# EUROPEAN PATENT SPECIFICATION

(11) **EP 1 332 579 B1**
(45) Date of publication and mention of the grant of the patent: **27.07.2005**
(21) Application number: 00989997.2
(22) Date of filing: 19.12.2000
(51) Int. Cl.: H04L 12/14

(54) **A METHOD FOR BILLING A SUBSCRIBER FOR DATA TRANSMITTED IN A SIGNALING SYSTEM**
VERFAHREN ZUR GEBÜHRENBERECHNUNG EINES TEILNEMMERS FÜR DATENÜBERTRAGUNG IN SIGNALISIERUNGSMITTEILUNGEN
PROCEDE PERMETTANT DE FACTURER A UN ABONNE DES DONNEES TRANSMISES DANS UN SYSTEME DE SIGNALISATION

(30) Priority: 06.11.2000 WO PCT/EP00/10942
(43) Date of publication of application: 06.08.2003
(73) Proprietor: Nokia Corporation, 02150 Espoo (FI)
(72) Inventor: SYRJÄLÄ, Jari, 01630 Vantaa (FI); MARTIN, Markus, 00200 Helsinki (FI); KOSKINEN, Juha-Pekka, 13210 Hämeenlinna (FI); VALLINEN, Juha, R., 33900 Tampere (FI); GREIS, Marc, 00180 Helsinki (FI); SIREN, Jane Tapani, 33820 Tampere (FI)
(74) Representative: Leson, Thomas Johannes Alois, Dipl.-Ing.
(86) International application number: PCT/EP2000/012957
(87) International publication number: WO 2002/037760

(56) References cited:
- WO-A-00/33550
- WO-A-00/65785
- MMUSIC WG: HANDLEY ET AL: "draft-ietf-sip-rfc2543bis-00.ps - SIP: Session Initiation Protocol" INTERNET ENGINEERING TASK FORCE, XX, XX, 5 June 2000 (2000-06-05), pages 1-129, XP002164649

## Description

### FIELD OF THE INVENTION

The present invention relates to a method for billing a subscriber for data transmission in a communication network.

### BACKGROUND OF THE INVENTION

Recently, developments concerning communication networks focus also on a communication network enabling transmission of (speech) data on the basis of the Internet Protocol (IP), known as Voice over IP (VoIP) and/or IP Telephony.

Such communication networks comprise an access network via which a subscriber's terminal gains access and/or connects to a core network. The access network is specific to a connection technology such as wireless/radio access networks or non-wireless access networks, while the core network is independent of the connection technology adopted for connection of the terminal to the network.

Prior art document WO 00/65785 discloses a method of routing signaling messages in a communications network and of billing for content sent in the body of these signaling messages.

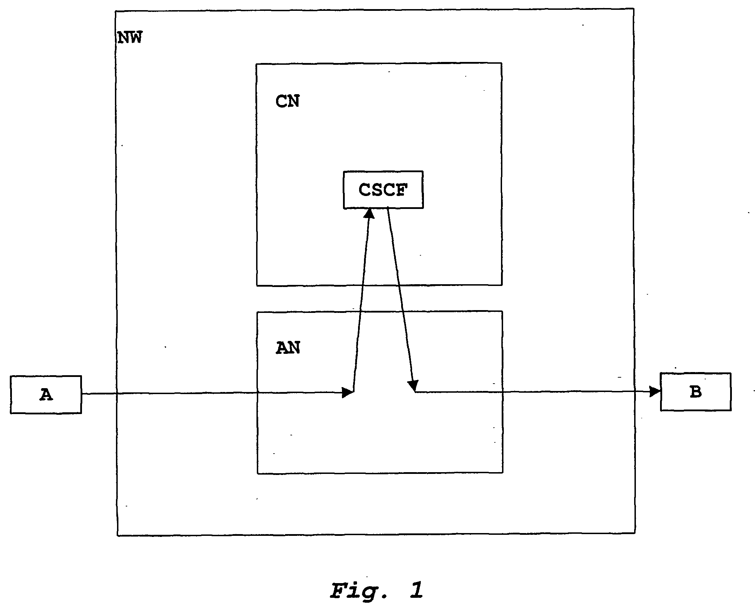

Fig. 1 of the drawings shows in rough outline the basic constituents of such a communication network. It is to be noted that the drawing illustration has been significantly simplified for explanatory purposes such that Fig. 1 shows only those components considered to be relevant for the understanding of the present invention.

A subscriber, i.e. a subscriber's terminal A establishes a communication path via the network NW to a communication destination B. The subscriber's terminal may be any wireless or non-wireless terminal, as long as it is adapted to co-operate with the communication network NW. Likewise, the communication destination may be a terminal of a subscriber to said network. Nevertheless, it may be any terminal and also a terminal having subscribed to another network (not shown). A terminal may be identified by its address.

The communication network NW consists of an access network AN and a core network CN. Since the access network technology is of minor interest for the present invention, a detailed description thereof is omitted. However, the access network may for example be a UMTS (Universal Mobile Telecommunications System) access network, a GPRS (General Packet Radio Service) access network, or the like.

The core network CN in turn comprises at least one call control entity also referred to as call state control functional entity CSCF. The call state control function CSCF comprises a serving CSCF and an interrogating CSCF. The serving CSCF is used for mobile originated communications and also to support mobile terminated communications. The serving CSCF provides a serving profile database SPD (not shown) and an address handling AH (also not shown) functionality. The serving CSCF supports the signaling interactions with a terminal. The interrogating CSCF is used for mobile terminated communications and is also used to determine how to route mobile terminated calls. The interrogating CSCF interrogates a home subscriber server HSS (not shown) for information to enable the call to be directed to the serving CSCF. The interrogating CSCF provides an incoming call gateway functionality ICGW and the address handling AH functionality. Both, the serving and interrogating CSCF components can be provided in a single CSCF if required.

Particularly, the call state control function CSCF provides a call control functionality CCF. In connection therewith, it provides among others for
- call set-up/termination and state/event management
- call event reporting for billing, auditing, intercept or other purposes,
- receiving and processing application level registrations.

In currently developed communication networks, signaling within a network as described above is based on the Session Initiation Protocol SIP. According to the Session Initiation Protocol, SIP message headers are in plain text and look similar to e-mails. Also, SIP uses a client server model similar to the Hypertext transfer protocol HTTP and many others, and is used in conjunction with other protocols such as Session Description Protocol SDP etc.

Signaling is effected by exchanging SIP messages. SIP messages can be divided into SIP request messages and SIP response messages.

SIP request messages are SIP INVITE (invites client or server to establish a session), SIP ACK (confirmation reception of a final response to an INVITE message), SIP BYE (sender wishes to close the session), SIP CANCEL (cancels pending requests), SIP OPTIONS (asks for information about capabilities before establishing a session), SIP REGISTER (informs a location server of the client's IP address).

SIP response messages are 1xx Informational, 2xx Success, 3xx REDIRECTION, 4xx CLIENT ERROR, 5XX SERVER ERROR, 6XX GLOBAL FAILURE. Such SIP response messages use a 3 digit number, e.g. 1xx. The first digit defines the category, while the next two digits allow up to 100 variations, e.g. 200 OK (successful invitation).

The call state control functional entity CSCF in connection with the SIP serves as a SIP server with which session establishment is effected according to known SIP session establishment procedures which are not described here in detail.

The above briefly described SIP standards enable the sending of different types of content within the SIP signaling, for example with the SIP INVITE message. The content is defined with content type and content length field within the SIP message (i.e. within the SIP message header), whereas the actual content is inserted into the message body. Such content to be inserted can be any content which has a MIME type definition. MIME (= Multipurpose Internet Mail Extensions) provide a common structure for encoding a range of electronic documents or other multimedia data. For example, such MIME type content could be text, image, audio, video, compressed file, application data, HyperText Markup Language (HTML) data, e-mail data.

Using MIME enables signaling the type of "object" being carried, associating a file name with an object, associating several independent objects for forming a multi-part object, handling data encoded in text or binary and -if necessary- re-encoding the binary as text.

Still further, SIP message headers may include fields not necessarily needed for call setup signaling such as a subject field in the SIP INVITE message header, which fields may contain some other contents. For example, the content of the subject field is shown/displayed in the called subscriber's terminal, so that an informational content from subscriber A can already be delivered to subscriber B within the header (one or more header fields). Stated in other words, the subject field within a SIP message header could be used as to convey a short message.

Thus, as content can be delivered already within -for example- the SIP INVITE message (or any other SIP message) forwarded from subscriber A to subscriber B, there is no possibility for charging activated as the subscriber B has not answered the call.

Furthermore, even if subscriber B should answer the call, with currently existing mechanisms the charging could only be based on charging parameters such as time (start time of the call and/or duration of the call), and/or B's address.

Apparently, content transmitted within signaling messages remains uncharged and could be sent for free.

However, as already the signaling and the content included therein consumes network transmission resources, it is undesirable that such a use of the network transmission resources should be free of charge.

### SUMMARY OF THE INVENTION

Hence, it is an object of the present invention to indicate a method for billing a subscriber for data transmission in a communication network, which enables already the billing for contents transmitted in connection with call establishment.

According to the present invention, the above object is achieved by the method of claims 1-13.

The subject-matter relates to a method for billing a subscriber for data transmission in a communication network said communication network comprising at least one call control entity for controlling calls to be established from a subscriber to a communication destination, said method comprising the steps of: forwarding a signaling message from said subscriber to said destination, said signaling message comprising a message header and a message body, said message header including information descriptive for a content carried in the message body, analyzing said signaling message header at said call control entity, and generating billing information based on the result of analysis.

According to further developments of the present invention
- said communication network is operated using the Session Initiation Protocol SIP;
- said signaling message is a SIP message;
- said message header comprises a content type field;
- said message header comprises a content length field;
- said message header comprises a content type and length field;
- said billing information is generated dependent on said content type;
- said billing information is generated dependent on said content length;
- said billing information is generated dependent on said content type and said content length;
- said content carried in said message body is a Multipurpose Internet Mail Extension (MIME) type content;
- said MIME type content is at least one of at least the following: text, image, audio, video, compressed file, application data, HyperText Markup Language (HTML) data, e-mail data;
- said billing information generated is a Call Detail Record (CDR);
- said SIP message is a SIP request message of SIP INVITE, SIP ACK, SIP BYE, SIP CANCEL, SIP OPTIONS, SIP REGISTER;
- said SIP message is a SIP response message of 1xx Informational, 2xx Success, 3xx REDIRECTION, 4xx CLIENT ERROR, 5XX SERVER ERROR, 6XX GLOBAL FAILURE.

The billing information generated can be used in a prepaid charging application. In a prepaid charging application, the billing information can be used to subtract a prepaid credit account. The account is typically subscriber specific. Thus the billing information generated dependent on said content type and/or said content length is used to determine the amount of credit that must be subtracted from the subscriber's account, who is paying for the content carried in the signaling message. If there is no sufficient prepaid credit available, the content can be deleted from the signaling message relayed or the processing of the signaled call with which the content is associated can be terminated.

Accordingly, by virtue of the present invention, it is possible to charge a subscriber already for delivery of data during call establishment.

Still further, charging / billing does not necessitate that a call is actually established since charging is already enabled even if a called party / communication destination does not answer during call establishment.

Also, charging can be based on the delivered content type. Thus, for the same amount of data but for a different type of content, a network operator may charge differently depending on the content type.

Additionally, it may be charged only on the basis of the amount of data or based on a combination of the type and amount (length) of data.

Moreover, charging on the basis of the type and or length of data can be combined with traditional charging parameters such as the address of the communication destination, the time of communication (start time) as well as the duration of the communication. Such a combination is of course, conceivable for all possible permutations of combinations of one or more of the mentioned parameters.

### BRIEF DESCRIPTION OF THE DRAWINGS

The above and further objects, features and advantages of the present invention will become more fully apparent when referring to the accompanying drawings, in which
Fig. 1 shows in rough outline the basic constituents of a communication network adapted to implement the present invention; and
Fig. 2 illustrates a flowchart of the basic processing steps involved in the present invention.

### DETAILED DESCRIPTION OF EMBODIMENTS

The present invention will now be described in detail with reference to the drawings.

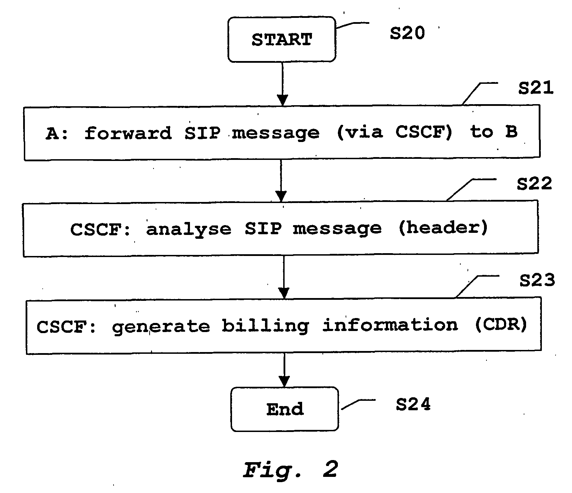

Fig. 2 illustrates a flowchart of the basic processing steps involved in the present invention. As shown in Fig. 2, the process starts in a step S20. In a subsequent step S21, the subscriber's A terminal forwards a signaling message such as a SIP message via the communication network towards a communication destination, e.g. a terminal of a subscriber B. For example, the SIP message is a SIP INVITE message or any other of the above mentioned SIP messages.

As the communication path is passing via the CSCF of the core network, at step S22 the CSCF analyses the SIP message. Stated in other words, the fields of the SIP message are analyzed. Every SIP message comprises at least a message body (carrying a content) and a message header carrying information descriptive for a content carried in the message body. In particular, the message header may comprise a content type field, or a content length field, or a content type field and a content length field.

As the SIP messages are suitable for embedding MIME encoded contents therein, the content type field of the SIP message header may include any of the above referenced MIME types. That is, the SIP message header may specify that the content carried in the message body is at least one of at least the following MIME content types: text, image, audio, video, compressed file, application data, HyperText Markup Language (HTML) data, e-mail data, and the like.

Based on the analysis in step S22, the CSCF generates, in step S23, billing information. The generated billing information is a call detail record CDR.

Generally, such billing information and/or CDR is a formatted collection of information about a chargeable event (e.g. time of call set-up, duration of said call, amount of data transferred, etc.) for use in billing and accounting. For each party to be charged for parts of or for all charges of a chargeable event, a separate call detail record shall be generated. That is, more than one CDR may be generated for a single chargeable event, for example because of its long duration, or because more than one charged party is to be charged.

The above mentioned general principles for the billing information and/or call detail record remain valid also in connection with the present invention.

In particular, the CDR generated according to the present invention in step S23 has fields like timestamp (time and/or duration), A subscriber address (e.g. caller), B subscriber address (e.g. callee), content type and content length, which can be used for subsequent billing purposes. Additionally, other conventionally known fields can be combined therewith. Subsequently, the process ends in a step S24.

Accordingly, as has been described above, according to the present invention it is possible to implement a content sensitive charging. Stated in other words, charging based on content included in any SIP message can be implemented such that upon reception of a SIP INVITE message (or any other SIP message) at the CSCF, the fields of the SIP message, particularly the fields comprised by the message header are subjected to an analysis. If the content type field has a special value (which can be predetermined by the network operator), such as "e-mail" or "video", a call detail record representing billing information is created by the CSCF. This enables a different charging, e.g. for "e-mail" and "video" contents. Nevertheless, all MIME type encoded contents as mentioned above may be predetermined to be subjected to a charging according to their content type.

Also, the charging may be effected already for the sent content, irrespective of whether the sent content was actually received at the communication destination.

Nevertheless, charging may be effected for those of sent contents which were actually received at the communication destination. In case charging is based on only those sent contents which were actually received, a feedback from the communication destination will have to be forwarded from the destination to the sender (caller). Such a feedback can be included without difficulties in the SIP ACK or 2xx success message, for example.

As already mentioned above, particularly the fields comprised by the message header are subjected to an analysis at the CSCF. Although herein before a focus has been laid on explaining the analysis conducted on the content type and content length field of the header, the analysis as conducted by the CSCF is of course also conducted on the subject field.

Thus, if analysis of the message header at the CSCF yields that said message header comprises a subject field, a billing information is generated dependent on the presence of said subject field. That is, dependent on the mere presence of the subject field, a billing information may be generated so that the inclusion of this field within the header is charged as for example a Short Message. In this case, charging is independent of whether the subject field actually contains some content (i.e. bits and/or bytes indicating some information) and even the presence of an "empty" subject field could be charged for. The reason therefor is that even in case of the mere presence of an "empty" field, some bits/bytes are reserved and are not available for other purposes and even an "empty" content transmitted requires valuable transmission network resources.

Alternatively, of course, the billing information could be generated dependent on the usage of said present subject field. That is, only if a subject field is present within the header and the subject field is detected to be not "empty", a subscriber may be billed for the actual usage of the subject field.

It is also conceivable that the charging for the use of the subject header field or any other field informative for the end-user, could be based, for instance, on the volume of data carried in the respective field. This means that different sized header fields could be charged differently. There could be different tariffs for the different sizes. For example, size up to 20 bytes could be offered for free, sizes 20-40 bytes using tariff x and sizes 40-100 using tariff y, wherein the tariffs x and y would be used to determine the actual amount of currency to be billed from an end-user. Of course, x and y could also represent actual amounts of currency.

It is further conceivable that there could be a user specific quota, which could be typically e.g. monthly quota. The quota could determine per user the amount, i.e. volume of data available for sending data for free in header fields such as the subject field. Therefore, for instance, a given user could transmit data in header fields or message contents up to e.g. 10 kilobytes for free monthly. When the limit is exceeded, the user will be charged for the exceeding data volumes until a new time period begins. The quota could also be specific for a combination of a given calling subscriber and a given called subscriber.

Tract and/or a record of the above mentioned quota could be kept, for instance, in the billing center, i.e. charging post processing system of the (e.g. mobile) communication network. The billing center gathers SIP message content related charging records (CDRs) from e.g. call processing servers (CPS, not shown) of CSCFs. The billing center could gather together all the CDRs associated with a given subscriber and it could sum up the data volumes indicated by the SIP message content related charging records (CDRs).

The subject field is an example only. Generally, any field within the header not necessarily required for call establishment / session initiation and carrying information intended for the use of the recipient at the destination could be charged for. Those header fields the presence of which and/or actual usage of which is to be charged can be predetermined by the network operator by correspondingly initializing the analyzing functionality at the CSCF. If information / contents carried in those header fields can be charged for, these header fields may also be used for information exchange between subscriber's.

The billing information generated can be used in a prepaid charging application. In a prepaid charging application, the billing information can be used to subtract a prepaid credit account. The account is typically subscriber specific. Thus the billing information generated dependent on said content type and/or said content length is used to determine the amount of credit that must be subtracted from the subscriber's account, who is paying for the content carried in the signaling message. If there is no sufficient prepaid credit available, the content can be deleted from the signaling message relayed or the processing of the signaled call with which the content is associated can be terminated.

Still further, it can also be conceived that the billing information generated about the contents is processed in several stages. It is possible that the CDRs generated on contents are not priced and/or charged for directly, but only in association with other CDRs and billing information associated with the paying subscriber and the sessions in the context of which the contents were sent. In an embodiment of the invention, the generated content CDRs are input to a mediation means. The mediation means may combine the several different types of CDRs associated with the session or call in the context of which the content was sent. The mediation means take as input all the CDRs associated with the session and which are of different types. These CDRs may include call-time charging CDRs, which charge the call conversation time, data traffic CDRs, which charge for the amount of data traffic sent and so on. In addition to these, the content CDRs are input to the mediation means. The mediation means output is, for instance, a uniform CDR, in which information on all the call related sub CDRs has been combined. The mediation means combines the information from the different types of CDRs using a processing logic which is dependent on the operator call pricing model. The output from the mediation means is, for instance, directed to a billing center, which forms the actual billing information on the CDRs. Alternatively, the mediation means provide information for a prepaid charging application on how much the prepaid credit should be debited for the session CDRs inputted to the mediation means. For instance, a greeting content such as a picture or video clip sent in association with a call invitation to an IP-telephony subscriber may be combined with the rest of the CDRs for the call.

Thus, the present invention proposes a method for billing a subscriber (A, B) for data transmission in a communication network (NW; AN, CN) said communication network comprising at least one call control entity (CSCF) for controlling calls to be established from a subscriber (A, B) to a communication destination (B, A), said method comprising the steps of: forwarding a signaling message from said subscriber (A) to said destination (B), said signaling message comprising a message header and a message body, said message header including information descriptive for a content carried in the message body, analyzing said signaling message header at said call'control entity (CSCF), and generating billing information based on the result of analysis.

Although the present invention has been described herein above with reference to its preferred embodiments, it should be understood that numerous modifications may be made thereto without departing from the scope of the invention.

## Claims

1. A method for billing a subscriber (A, B) for data transmission in a communication network (NW; AN, CN)
said communication network comprising at least one call control entity (CSCF) for controlling calls to be established from a subscriber (A, B) to a communication destination (B, A),
said method comprising the steps of:
- forwarding a signaling message from said subscriber (A) to said destination (B),
said signaling message comprising a message header and a message body, said message header including information descriptive for a content carried in the message body,
- analyzing said signaling message header at said call control entity (CSCF), and
- generating billing information based on the result of analysis,
- wherein said communication network is operated using the Session Initiation Protocol SIP;
- wherein said signaling message is a SIP message;
- wherein said message header comprises a subject field;
and **characterised in that**
- said billing information is generated dependent on the presence of said subject field.

2. A method according to claim 1, wherein
said message header comprises a content type field.

3. A method according to claim 1, wherein
said message header comprises a content length field.

4. A method according to claim 2, wherein
said message header comprises a content length field.

5. A method according to claim 2, wherein
said billing information is generated dependent on said content type.

6. A method according to claim 3 or 4, wherein said billing information is generated dependent on said content length.

7. A method according to claim 4, wherein said billing information is generated dependent on said content type and said content length.

8. A method according to claim 1, wherein
said content carried in said message body is a Multipurpose Internet Mail Extension, MIME, type content.

9. A method according to claim 8, wherein said MIME type content is at least one of at least the following: text, image, audio, video, compressed file, application data, HyperText Markup Language, HTML, data, e-mail data.

10. A method according to claim 1, wherein
said billing information generated is a Call Detail Record, CDR.

11. A method according to claim 1, wherein said SIP message is a SIP request message of SIP INVITE, SIP ACK, SIP BYE, SIP CANCEL, SIP OPTIONS, SIP REGISTER.

12. A method according to claim 1, wherein said SIP message is a SIP response message of 1xx Informational, 2xx Success, 3xx REDIRECTION, 4xx CLIENT ERROR, 5XX SERVER ERROR, 6XX GLOBAL FAILURE.

13. A method according to claim 1, wherein said billing information is generated dependent on the usage of said present subject field.

## Patentansprüche

1. Verfahren zur Gebührenerfassung eines Teilnehmers (A, B) für eineDatenübertragung in einem Kommunikationsnetz (NW; AN, CN), wobei
das Kommunikationsnetz zumindest eine Anrufsteuerungseinheit (CSCF) zum Steuern von von einem Teilnehmer (A, B) zu einem Kommunikationsziel (B, A) zu errichtenden Anrufen umfasst,
wobei das Verfahren die Schritte umfasst:
Weiterleiten einer Signalisierungsmitteilung von dem Teilnehmer (A) zu dem Ziel (B),
wobei die Signalisierungsmitteilung einen Mitteilungsheader und einen Mitteilungshauptteil umfasst, wobei der Mitteilungsheader Informationen enthält, die einen in dem Mitteilungshauptteil getragenen Inhalt beschreiben,
Analysieren des Signalisierungsmitteilungsheaders an der Anrufsteuerungseinheit (CSCF), und
Erzeugen von Gebührenerfassungsinformationen beruhend auf dem Ergebnis der Analyse,
wobei das Kommunikationsnetz unter Verwendung des Session Initiation Protocol SIP betrieben wird,
wobei die Signalisierungsmitteilung eine SIP-Mitteilung ist,
wobei der Mitteilungsheader ein Betrefffeld umfasst, **dadurch gekennzeichnet, dass**
die Gebührenerfassungsinformationen in Abhängigkeit von dem Vorhandensein des Betrefffeldes erzeugt werden.

2. Verfahren nach Patentanspruch 1, wobei der Mitteilungsheader ein Inhaltsartfeld umfasst.

3. Verfahren nach Patentanspruch 1, wobei der Mitteilungsheader ein Inhaltslängenfeld umfasst.

4. Verfahren nach Patentanspruch 2, wobei der Mitteilungsheader ein Inhaltslängenfeld umfasst.

5. Verfahren nach Patentanspruch 2, wobei die Gebührenerfassungsinformationen in Abhängigkeit von der Inhaltsart erzeugt werden.

6. Verfahren nach Patentanspruch 3 oder 4, wobei die Gebührenerfassungsinformationen in Abhängigkeit von der Inhaltslänge erzeugt werden.

7. Verfahren nach Patentanspruch 4, wobei die Gebührenerfassungsinformationen in Abhängigkeit von der Inhaltsart und der Inhaltslänge erzeugt werden.

8. Verfahren nach Patentanspruch 1, wobei der in dem Mitteilungshauptteil getragene Inhalt ein Inhalt vom Typ Multipurpose Internet Mail Extension, MIME ist.

9. Verfahren nach Patentanspruch 8, wobei der MIME-Inhalt zumindest Text und/oder ein Bild und/oder Ton und/oder Video und/oder eine komprimierte Datei und/oder Anwendungsdaten und/oder Hypertext Markup Language-, HTML- Daten und/oder Emaildaten umfasst.

10. Verfahren nach Patentanspruch 1, wobei die erzeugten Gebührenerfassungsinformationen eine Anrufdetailaufzeichnung, CDR, umfassen.

11. Verfahren nach Patentanspruch 1, wobei die SIP-Mitteilung eine SIP-Anforderungsmitteilung aus SIP INVITE, SIP ACK, SIP BYE, SIP CANCEL, SIP OPTION, SIP REGISTER ist.

12. Verfahren nach Patentanspruch 1, wobei die SIP-Mitteilung eine SIP-Antwortmitteilung aus 1xx INFORMATIONAL, 2xx SUCCESS, 3xx REDIRECTION, 4xx CLIENT ERROR, 5xx SERVER ERROR, 6xx GLOBAL FAILURE ist.

13. Verfahren nach Patentanspruch 1, wobei die Gebührenerfassungsinformationen in Abhängigkeit von der Verwendung des vorhandenen Betrefffeldes erzeugt werden.

## Revendications

1. Procédé pour facturer à un abonné (A, B) une transmission de données dans un réseau de communication (NW ; AN, CN)
ledit réseau de communication comprenant au moins une entité de contrôle d'appels (CSCF) pour contrôler des appels devant être établis d'un abonné (A, B) vers une destination de communication (B, A),
ledit procédé comprenant les étapes consistant à :
- acheminer un message de signalisation dudit abonné (A) vers ladite destination (B),
ledit message de signalisation comprenant un en-tête de message et un corps de message, ledit en-tête de message comprenant des informations décrivant un contenu transporté dans le corps de message,
- analyser ledit en-tête de message de signalisation au niveau de ladite entité de contrôle d'appels (CSCF), et
- générer des informations de facturation sur la base du résultat d'analyse,
- dans lequel ledit réseau de communication est mis en oeuvre en utilisant le protocole SIP (Session Initiation Protocol) ;
- dans lequel ledit message de signalisation est un message SIP ;
- dans lequel ledit en-tête de message comprend un champ objet ;
et **caractérisé en ce que**
- lesdites informations de facturation sont générées en fonction de la présence dudit champ objet.

2. Procédé selon la revendication 1, dans lequel
ledit en-tête de message comprend un champ de type de contenu.

3. Procédé selon la revendication 1, dans lequel
ledit en-tête de message comprend un champ de longueur de contenu.

4. Procédé selon la revendication 2, dans lequel
ledit en-tête de message comprend un champ de longueur de contenu.

5. Procédé selon la revendication 2, dans lequel
lesdites informations de facturation sont générées en fonction dudit type de contenu.

6. Procédé selon la revendication 3 ou 4, dans lequel lesdites informations de facturation sont générées en fonction de ladite longueur de contenu.

7. Procédé selon la revendication 4, dans lequel lesdites informations de facturation sont générées en fonction dudit type de contenu et de ladite longueur de contenu.

8. Procédé selon la revendication 1, dans lequel
ledit contenu transporté dans ledit corps de message est un contenu du type MIME (Multipurpose Internet Mail Extension).

9. Procédé selon la revendication 8, dans lequel ledit contenu du type MIME est au moins l'un d'au moins les éléments suivants : du texte, une image, des données audio, des données video, un fichier compressé, des données d'application, des données HTML (HyperText Markup Language), des données de courrier électronique.

10. Procédé selon la revendication 1, dans lequel
lesdites informations de facturation générées sont un enregistrement détaillé des appels, CDR.

11. Procédé selon la revendication 1, dans lequel ledit message SIP est un message de demande SIP, SIP INVITE, SIP ACK, SIP BYE, SIP CANCEL, SIP OPTIONS, SIP REGISTER.

12. Procédé selon la revendication 1, dans lequel ledit message SIP est un message de réponse SIP d'information 1xx, de réussite 2xx, de redirection 3xx, d'erreur client 4xx, d'erreur serveur 5xx, de défaut global 6xx.

13. Procédé selon la revendication 1, dans lequel lesdites informations de facturation sont générées en fonction de l'utilisation dudit champ objet actuel.
